Europäisches Patentamt

European Patent Office

Office européen des brevets

(11) Numéro de publication: **0 089 871**
**B1**

(12) **FASCICULE DE BREVET EUROPEEN**

(45) Date de publication du fascicule du brevet:
**18.12.85**

(21) Numéro de dépôt: **83400501.9**

(22) Date de dépôt: **11.03.83**

(51) Int. Cl.⁴: **H 04 N 17/00**

(54) Dispositif de génération de signaux de test d'équipements électroniques.

(30) Priorité: **19.03.82 FR 8204752**

(43) Date de publication de la demande:
**28.09.83 Bulletin 83/39**

(45) Mention de la délivrance du brevet:
**18.12.85 Bulletin 85/51**

(84) Etats contractants désignés:
**BE DE GB IT NL**

(56) Documents cités:
**EP - A - 0 018 551**

**N.E.C. RESEARCH AND DEVELOPMENT, no. 63, octobre 1981, pages 59-66, Tokyo JP H. Akiyama et al.: "Digital VITS generator for television broadcasting"**
**IEEE TRANS. ON BROADCASTING, vol. BC-26, no. 3, septembre 1980, pages 82-90, New York US; N.H. BURKIES et al.: "Digital generation of test signals for colour television"**

(73) Titulaire: **THOMSON-CSF, 173, Boulevard Haussmann, F-75379 Paris Cedex 08 (FR)**

(72) Inventeur: **Pham Van Cang, Luc, THOMSON-CSF SCPI 173, bld Haussmann, F-75379 Paris Cedex 08 (FR)**

(74) Mandataire: **Lincot, Georges et al, THOMSON-CSF SCPI 173, Bld Haussmann, F-75379 Paris Cedex 08 (FR)**

ACTORUM AG

# Description

La présente invention concerne un dispositif de génération de signaux de test d'équipements électroniques notamment d'équipements de télévision.

On connaît dans le domaine particulier de la télévision des générateurs de signaux de test, qui permettent de contrôler le fonctionnement des appareils émetteur-récepteur de télévision. Ces générateurs fournissent la plupart des signaux nécessaires aux test courants et certains sont définis par des normes internationales pour faciliter les opérations de caractérisation des signaux ou les maintenances à grande distance des émetteurs-récepteurs de télévision. Certains de ces signaux sont insérés dans l'image de télévision à des lignes bien déterminées par un standard international, qui les rendent invisibles sur les écrans des récepteurs de télévision. De cette façon les contrôles et les mesures restent entièrement transparents pour l'usager. Ces générateurs sont pour la plupart réalisés dans des techniques analogiques conventionnelles de formation de signaux.

On connaît également des générateurs de signaux digitaux ou numériques dont le rôle est de délivrer une suite de valeurs numériques ou d'échantillons décrivant le signal de télévision de test, cette suite est gardée dans une mémoire morte, et est lue à une cadence appropriée pour être convertie ensuite par un convertisseur numérique-analogique qui reconstitue le signal de télévision désiré. La technique digitale utilisée pour délivrer des signaux de test de télévision est réputée pour donner des signaux fiables et de bonne qualité, si les signaux sont constitués par un grand nombre d'échantillons par ligne et si chaque échantillon est constitué par un nombre suffisant de bits. Un autre intérêt de la technique digitale est qu'il est également possible d'obtenir des signaux composés, en sélectionnant et en combinant différentes mémoires.

Toutefois un problème se pose si l'on désire obtenir des générateurs de signaux de test digitaux, une très grande variété de signaux. Comme un signal délivré par un générateur classique, par exemple dans le mode noir et blanc, nécessite pour sa reconstitution 1 600 à 2048 échantillons à huit bits par ligne de balayage, l'obtention d'un grand nombre de signaux de test nécessite une capacité de mémoires mortes importante qui peut aller jusqu'à N.16 K bits où N représente le nombre de signaux de test mémorisés sous la forme d'échantillons. Cette capacité est notablement augmentée pour les générateurs de signaux de télévision en couleurs où les signaux de luminance nécessitent des échantillons d'au moins dix bits et où les échantillons de chrominance, qui sont quatre fois moins nombreux que ceux de luminance, nécessitent au moins huit bits. Par conséquent la capacité des mémoires mortes nécessaires pour réaliser un générateur de signaux de test échantillon de l'art antérieur augmente, jusqu'à dépasser très rapidement les limites raisonnables, lorsque le nombre de signaux de test exigé atteint seulement quelques dizaines de signaux.

D'autre part la configuration des signaux de test reste figée dans la mémoire morte, de sorte qu'il est impossible en cours d'essai de faire évoluer les signaux ou même de créer d'autres signaux qui pourraient apparaître à l'opérateur plus conformes au diagnostic qu'il obtient de l'équipement de télévision sous test.

Le but de l'invention est de pallier les inconvénients précités à l'aide d'un dispositif de génération de signaux de test qui soit plus souple d'utilisation que les dispositifs de l'art antérieur et qui permette de générer et de créer une multitude de signaux de test conformes aux besoins de l'opérateur.

A cet effet l'invention a pour objet un dispositif de génération de signaux de test d'équipement électronique comportant des moyens de mémorisation des signaux de test sous la forme d'échantillons numériques couplés à un convertisseur numérique-analogique pour transformer les échantillons mis sous forme numérique en signaux analogiques à la sortie du dispositif, caractérisé en ce qu'il comprend:
— une mémoire à lecture-écriture interposée entre le convertisseur analogique-numérique et les moyens de mémorisation;
— un calculateur couplé aux moyens de mémorisation et à la mémoire à lecture-écriture comprenant:
— des moyens de création de signaux de test sous la forme d'échantillons numériques;
— des moyens pour transférer, à l'intérieur de la mémoire à lecture-écriture, les échantillons mémorisés à l'intérieur des moyens de mémorisation et les signaux de test créés par les moyens de création;
— ainsi que des moyens pour synchroniser le transfert des échantillons mémorisés à l'intérieur de la mémoire à lecture-écriture à destination du convertisseur numérique-analogique.

Selon une autre caractéristique de l'invention, les moyens de création des signaux de test sont constitués par une unité de traitement microprogrammée, comprenant une unité centrale de traitement couplée à des moyens de mémorisation de descripteurs de signaux, ainsi qu'à des moyens de mémorisation de séquences d'instructions constituant chacune un programme particulier de génération d'un signal de test élémentaire. Grâce à cette disposition toutes les ressources nécessaires pour créer un signal de test sont identifiables à l'aide de descripteurs de signaux qui peuvent être adressés directement à l'aide par exemple d'un clavier relié à l'unité de traitement. Comme chaque descripteur contient en particulier l'adresse de début d'un programme de génération d'un signal de test élémentaire, l'opérateur peut, directement à partir par exemple du clavier ou de tout autre moyen d'accès, lancer les programmes qui correspondent au type de signal de test qu'il souhaite obtenir.

Cette disposition est particulièrement avantageuse, car elle autorise la création d'une multitude de signaux de test composés chacun de l'association de plusieurs signaux élémentaires pouvant être créés successivement dans le temps. Cette création a lieu directement par une sélection par l'opérateur des différents descripteurs dont il a besoin pour composer son signal.

Un autre avantage du dispositif selon l'invention est qu'il permet chaque fois qu'un nouveau signal de test est créé d'enrichir la bibliothèque des signaux de test déjà contenus dans les moyens de mémorisation, puisque cette dernière opération s'exécute par un simple transfert des échantillons créés de l'unité de traitement vers les moyens de mémorisation.

D'autre part, la présence d'une mémoire à lecture-écriture dans le dispositif par laquelle transitent tous les échantillons numériques qui sont dirigés vers le décodeur analogique numérique permet d'assurer l'adaptation des débits d'information provenant soit du calculateur, soit des moyens de mémorisation pour reconstituer, à l'aide des moyens de synchronisation, des signaux de test analogiques répondant aux normes des standards de télévision.

D'autres caractéristiques et avantages de l'invention apparaîtront au cours de la description faite au regard des dessins annexés, donnés uniquement à titre d'exemple et dans lesquels:

La fig. 1 est une représentation sous forme synoptique du dispositif de génération de signaux de test de télévision suivant l'invention.

La fig. 2 est une représentation d'un descripteur de signal.

La fig. 3 est une représentation des mémoires mortes comportant des moyens de mémorisation, et de leurs circuits associés.

La fig. 4 est une représentation des circuits d'adressage et de l'organisation de la mémoire à lecture-écriture.

La fig. 5 est une représentation des moyens de synchronisation.

La fig. 6 est un organigramme représentant le fonctionnement général du dispositif.

La fig. 7 est un organigramme d'organisation d'un sous-programme pour le calcul d'un signal élémentaire.

La fig. 8 représente une forme possible d'un signal généré par le dispositif.

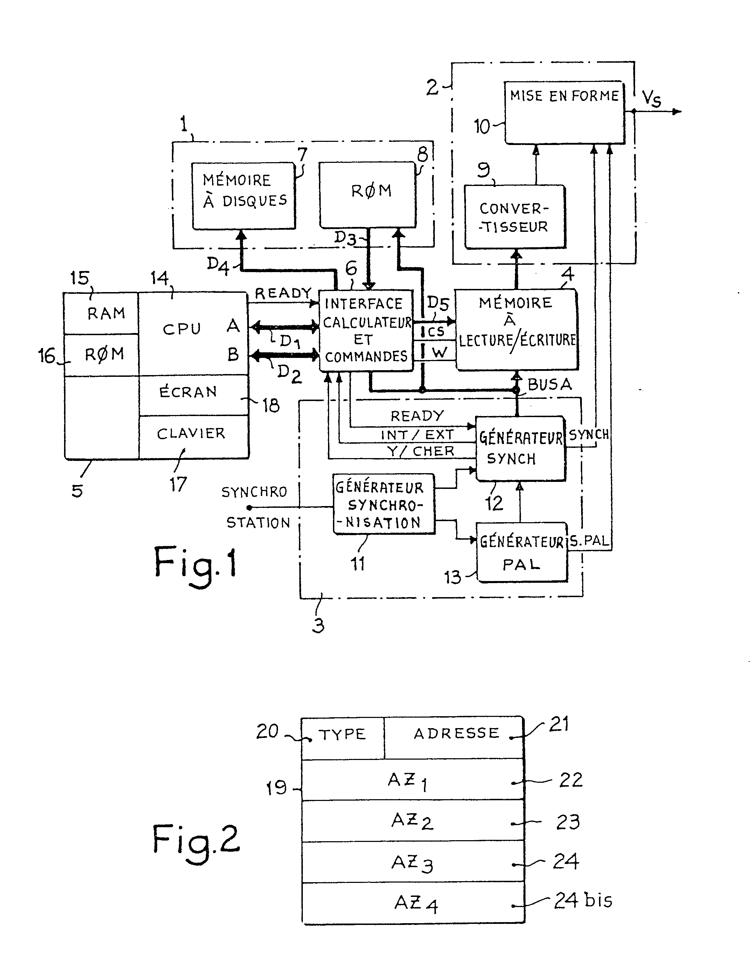

Le dispositif représenté à la fig. 1 comprend des moyens de mémorisation 1, un convertisseur analogique-numérique 2, des moyens de synchronisation 3, une mémoire à lecture-écriture 4 et un calculateur 5. Une interface 6 assure les liaisons entre les moyens de mémorisation 1 et la mémoire à lecture-écriture 4, cette interface est commandée par le calculateur 5. Le calculateur 5 est relié par ses portes A et B à l'interface 6 au moyen, respectivement, de la ligne donnée D1 et de la ligne de commande de destination de données D2. Les données transitent entre les moyens de mémorisation 1 et l'interface 6 au moyen des lignes de données D3 et D4. Ces données ressortent de l'interface 6 à destination de la mémoire lecture-écriture 4 au moyen de la ligne de données D5.

Les moyens de mémorisation 1 comprennent une mémoire de masse 7 et une mémoire morte 8.

La mémoire de masse 7 est une mémoire à très grande capacité qui renferme la bibliothèque des signaux de test du dispositif, elle peut être constituée par une mémoire à disque ou une disquette. Le transfert des signaux entre la mémoire de masse 7 et l'interface 6 a lieu sur la ligne de données D4 sous le contrôle du calculateur 5. La mémoire morte 8 contient un jeu de signaux de test préprogrammé. Ce jeu de signaux peut être en nombre très réduit et peut être constitué par ceux des signaux les plus couramment utilisés pour tester les appareils de télévision, pour permettre des tests rapides sans mettre en œuvre la bibliothèque des signaux de test contenus dans la mémoire de masse 7.

Le convertisseur analogique-numérique 2 comprend un convertisseur 9 dont les entrées reçoivent le signal numérique lu dans la mémoire 4 et dont la sortie délivre un signal analogique à destination d'un étage de mise en forme de signaux 10.

Les moyens de synchronisation 3 sont constitués par un générateur de synchronisation 11, un dispositif 12 de génération de signaux de synchronisation SYNCH et d'un dispositif 13 de génération des signaux de synchronisation PAL 13 à destination de l'étage de mise en forme 10.

La mémoire à lecture-écriture 4 est constituée par une mémoire vive du type RAM qui est une abréviation du terme anglo-saxon «random access memory».

La mémoire à lecture-écriture 4 ainsi que la mémoire morte 8 sont adressées par un bus d'adresses commun BUSA sur lequel transitent des adresses provenant du système de synchronisation 3 ou du calculateur 5 par l'intermédiaire de l'interface 6.

Le calculateur 5 a une structure de microordinateur et à ce titre est constitué, d'une façon connue par une unité centrale de traitement CPU 14, constituée par exemple par un microprocesseur, interconnecté sur ses bus de données et d'adresse à une mémoire centrale RAM 15 à au moins une mémoire morte ROM 16 à un clavier 17 et à un écran 18. Pour plus de détails sur la réalisation des microordinateurs on pourra se reporter au livre intitulé «Microprocesseurs et microordinateurs» de R. Lyon Caen et JM. Crozet, édité chez Masson, Paris 1977 ou au livre intitulé «Microcomputers systems», de Cay Weitzman, édité par Prentice Hall Inc., New York, 1974. La mémoire ROM 16 contient l'ensemble des tables et des microporgrammes nécessaires pour exécuter les transferts d'informations ou de données entre les moyens de mémorisation 1 et la mémoire à lecture-écriture 4 ainsi que ceux qui sont nécessaires pour la création des nouveaux signaux de test. Le contrôle et la commande de ces transferts sont assurés par l'exécution d'instructions d'entrée-sortie dont la mise en œuvre est généralement indiquée dans les spécifications techniques des microprocesseurs actuellement commercialisés et qui par conséquent n'ont pas besoin d'être décrits pour la compréhension de l'invention. Les tables utilisées pour la génération des signaux de test sont constituées par des zones de mémoire ROM 16 contenant les descripteurs de signaux.

Le format d'un descripteur de signal est représenté à la fig. 2. Sur cette figure le descripteur 19 est constitué par les zones 20 à 24 bis. La zone 20 mémorise le type du descripteur et permet de reconnaître le descripteur lorsqu'il est sélectionné au clavier par l'opérateur. La zone 21 contient l'adresse de début du programme de génération de signaux de test correspondant au descripteur, ce programme est mémorisé à l'intérieur de la mémoire ROM 16. La zone 22 spécifie l'adresse $AZ_1$ d'une zone de la mémoire centrale 15 dans laquelle est rangée l'amplitude du premier échantillon du signal correspondant au descripteur et à partir de laquelle sont rangés les échantillons suivants du signal. La zone 23 spécifie l'adresse $AZ_2$ d'une zone de la mémoire centrale 15 dans laquelle est rangée l'instant de début du signal. La zone 24 spécifie l'adresse $AZ_3$ d'une zone de la mémoire centrale 15 dans laquelle est rangée l'amplitude de la fin du signal. La zone 24 bis spécifie l'adresse $AZ_4$ d'une zone de la mémoire centrale 15 dans laquelle est rangée l'instant marquant la fin du signal. Les zones d'adresse $AZ_1$ à $AZ_4$ de la mémoire centrale sont écrites à partir du clavier 17 une fois que l'opérateur a sélectionné le descripteur.

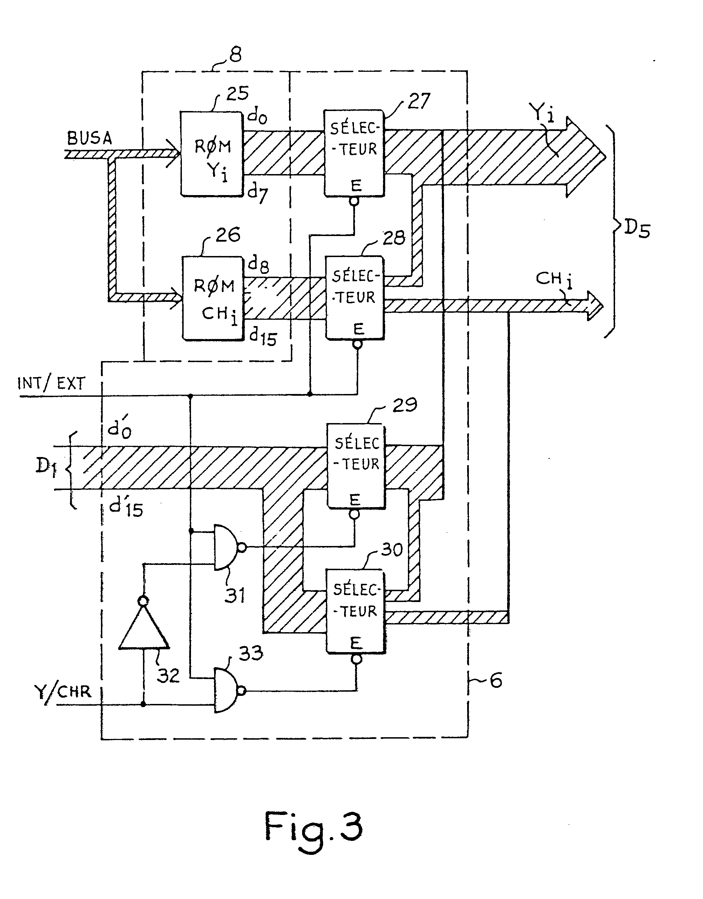

Les liaisons de la mémoire morte 8 ainsi que les liaisons du calculateur 5 avec la mémoire à lecture-écriture 4 sont représentées à la fig. 3. Sur cette figure, la mémoire morte 8 est constituée par deux blocs de mémoire 25 et 26. La mémoire 25 contient des échantillons $Y_i$ des signaux de luminance et la mémoire 26 contient des échantillons $CH_i$ des signaux de chrominance. Un plan de constitution de ces mémoires pourra être réalisé, par exemple, à l'aide de deux mémoires mortes de 32 K bits chacune du type N° 2732 commercialisé par la société Motorola, ce qui correspond à une capacité de 4 K mots de 16 bits qui peut ainsi recueillir 2 signaux de test à 2048 échantillons chacun. Selon cette organisation, un mot de 16 bits lu dans la mémoire 8 est placé sur les sorties d0 à d15 de la mémoire 8, les sorties d0 à d9 transmettant les bits de luminance, les sorties d10 à d13 transmettant les bits de chrominance et la sortie d15 transmettant un bit de contrôle. Les sorties d0 à d7 de la mémoire 25 sont reliées aux entrées respectives d'un sélecteur 27 et les sorties d8 à d15 de la mémoire 26 sont reliées aux entrées respectives d'un sélecteur 28. Les sélecteurs 27 et 28 transmettent respectivement les bits des échantillons $Y_i$ de luminance apparaissant sur les sorties d0 à d7 et les bits des échantillons $CH_i$ de chrominance apparaissant sur les sorties d8 à d13 des mémoires 25 et 26, sur la ligne de données D5, lorsqu'ils sont commandés sur leur entrée E.

Les données $d'_0$ à $d'_{15}$ provenant du calculateur sur la ligne de données D1 sont appliquées aux entrées respectives des sélecteurs 29 et 30. Ces données sont transmises par les sorties des sélecteurs 29 et 30 à destination de la ligne de données D5 lorsque les entrées E des sélecteurs 29 et 30 sont validées. La validation des entrées E des sélecteurs 27 à 30 est effectuée de la façon suivante. Les sélecteurs 27 et 28 sont commandés lorsque le dispositif est synchronisé par des signaux d'horloge externes provenant par exemple d'une station d'émission de télévision. Les sélecteurs 29 et 30 sont commandés lorsque le dispositif n'est pas relié à une station et qu'il fonctionne en mode interne sur une horloge interne. L'entrée E du sélecteur 29 est appliquée à la sortie de la porte NON ET 31 à deux entrées, une entrée recevant un signal de commande interne-externe INT/EXT provenant des moyens de synchronisation 3 et l'autre entrée est reliée à la sortie de l'amplificateur inverseur 32 qui reçoit sur une entrée un signal Y/CHR provenant également des moyens de synchronisation 3. L'entrée E du sélecteur 30 est reliée à la sortie de la porte NON ET 33 à deux entrées, une entrée recevant le signal interne-externe et dont l'autre entrée reçoit le signal Y-CHR. Le signal Y-CHR commande lorsqu'il est dans un premier état la sélection par le sélecteur 29 des échantillons $Y_i$ des signaux de luminance placés sur les lignes $d'_0$ à $d'_7$ de la ligne de donnée $D_1$ et commande lorsqu'il est dans un deuxième état la sélection par le sélecteur 30 des échantillons $CH_i$ des signaux de chrominance placés sur les lignes $d'_8$ à $d'_{13}$ de la ligne de donnée $D_1$.

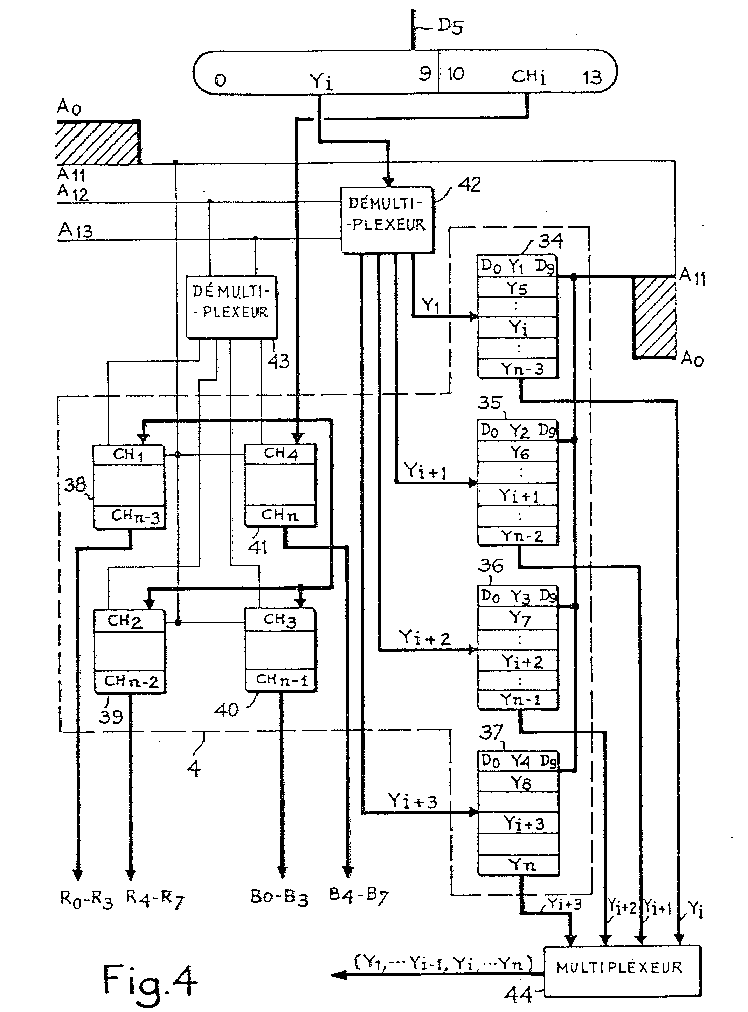

Un exemple d'organisation de la mémoire à lecture-écriture 4 est représenté à la fig. 4. La mémoire 4 est constituée de circuits de mémoires rapides par exemple de circuits statiques CMOS dont le temps de cycle est d'environ 100 nano/s. Pour permettre leur fonctionnement à la fréquence de 32 MHz qui correspond à la transmission de 2048 d'échantillons par ligne de télévision, ces circuits sont démultiplexés à l'écriture et multiplexés à la lecture par quatre afin de rendre transparent le multiplexage à l'utilisateur.

Dans un exemple de réalisation possible, des circuits de 4 K bits peuvent être utilisés, ce qui, compte tenu du multiplexage par quatre, permet de garder un jeu complet de huit signaux de test dans chaque circuit. Dans ce cas quarante circuits sont nécessaires pour la mémorisation des échantillons de luminance codés sur 10 bits, et seize circuits sont nécessaires pour la mémorisation des deux échantillons de chrominance. Dans l'exemple de la fig. 4, la mémoire 4 contient quatre blocs de mémoires 34 à 37 pour la mémorisation des signaux de luminance Y1 à YN et quatre blocs de mémoire 38 à 41 pour la mémorisation des signaux de chrominances CH1 à CHN. Les mémoires 34 à 37 sont partagées en mots de 10 bits représentant chacun un échantillon de luminance, les mémoires 38 à 41 sont partagées en mots de 4 bits représentant chacun un échantillon de chrominance. Chaque mot de 10 bits ou de 4 bits contenu dans une des mémoires 34 à 41 est adressé par les fils A0 à A11 du bus d'adresses BUSA. Les mots de luminance d0 à d9 et ceux de chrominance d10 à d13 qui sont transmis sur le bus D5 sont appliqués respectivement, d'une part, à l'entrée d'un démultiplexeur 42 et, d'autre part, à l'entrée d'un démultiplexeur 43. Le démultiplexeur 42 aiguille la suite Y1 à YN des mots de luminance constituées des bits d0 à d9 successivement dans l'un des quatre blocs de mémoire 34 à 37, de façon que la mémoire 34 contienne les mots Y1, Y5, ..., Yi, Yi+4, ...,

YN−3, la mémoire 35 contienne les mots Y2, Y6, ..., Yi+1, Yi+5, YN−2, la mémoire 36 contienne les mots Y3, Y7, ..., Yi+2, Yi+6, ..., YN−1 et la mémoire 37 contienne les mots Y4, Y8, ..., Yi+3, Yi+7, ..., YN. Le démultiplexeur 43 aiguille les mots de chrominance CH (d10 à d13) dans l'un des quatre blocs de mémoire 38 à 41, cycliquement en commençant par les mémoires 38 et en terminant par la mémoire 41.

La commande d'aiguillage des données, dans chacun des blocs 34 à 37, d'une part, et 38 à 41 d'autre part, est assurée par les fils d'adresses A12, A13 du bus d'adresses BUSA qui sont reliées sur les entrées de commande des démultiplexeurs 42 et 43. Les mots de luminance sont lus au travers du multiplexeur 44 qui délivre sur sa sortie les mots de luminance Y1 à YN en direction du convertisseur 9, lorsqu'ils sont successivement lus dans les blocs de mémoires 34 à 37. Les mots de chrominance qui sont lus dans les blocs 38 à 41 sont appliqués respectivement sur les lignes R0-R3, R4-R7 et B0-B3, B4-B7 à destination du convertisseur 9.

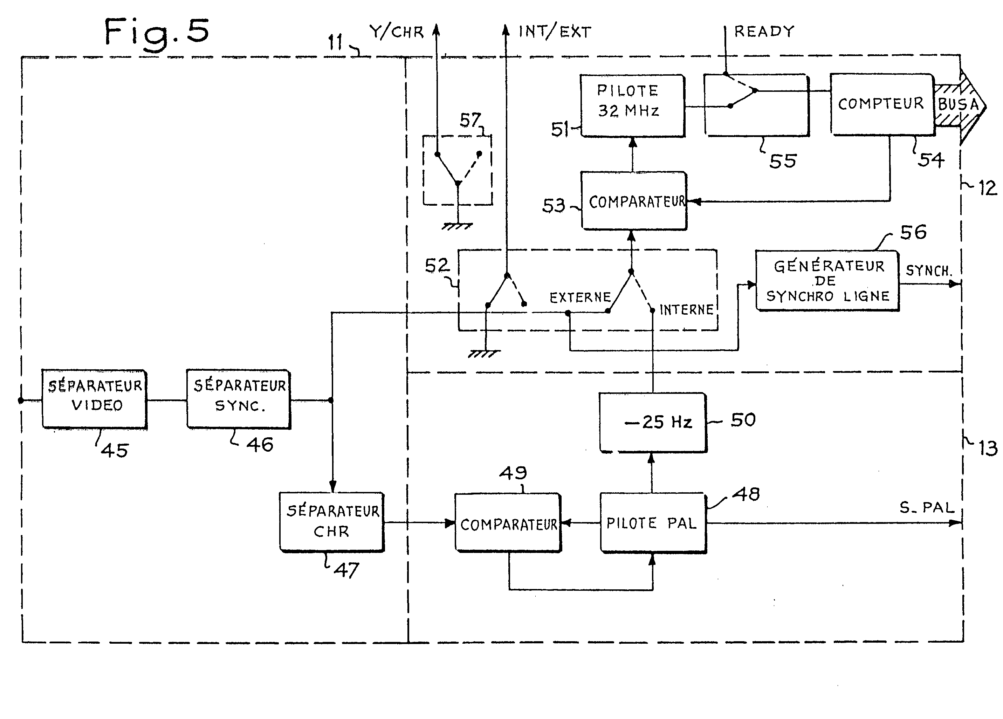

La fig. 5 représente sous forme synoptique un mode de réalisation des moyens de synchronisation.

Les moyens de synchronisation sont chargés de reconstituer les signaux de synchronisation ordinaires de luminance SYNCH et de chrominance S/PAL des signaux de télévision. Ces moyens de synchronisation peuvent eux-mêmes être synchronisés à partir d'un générateur externe de signaux de télévision situé par exemple dans une station de télévision ou travailler uniquement en mode interne en synchronisation aavec une horloge interne.

Lorsque le dispositif de génération de signaux de test est alimenté par un générateur externe de signaux de télévision, le générateur applique un signal de télévision à l'entrée du générateur de synchronisation 11. Le générateur de synchronisation 11 est constitué par un étage séparateur du signal vidéo 45 qui reçoit sur son entrée le signal de télévision et qui alimente sur sa sortie le séparateur 46 des tops de synchronisation. Il est constitué également par un étage de séparation des signaux de chrominance 47 couplé sur son entrée à la sortie du séparateur de synchronisation 46. Le séparateur 47 alimente par sa sortie l'entrée du générateur 13 de signaux de synchronisation standards PAL qui est composé d'une façon connue par un oscillateur comprenant un circuit oscillant 48 et un comparateur 49 qui délivre une tension de commande de l'ajustement de la fréquence de l'oscillateur lorsqu'un écart est détecté entre la fréquence de l'oscillateur et la fréquence des signaux délivrés par le séparateur de signaux de chrominance 47. La fréquence de l'oscillateur 48 est décalée de 25 périodes par un soustracteur de fréquences 50 qui reçoit sur son entrée la fréquence du standard de télévision PAL délivrée par l'oscillateur 48.

Le générateur de signaux de synchronisation 12 est constitué par un oscillateur 51 de fréquence 32 MHz qui est synchronisé sur la fréquence délivrée par le séparateur de synchronisation 46 ou sur la fréquence délivrée par le soustracteur de fréquence 50. L'aiguillage sur l'une de ces deux fréquences s'effectue à l'aide du commutateur 52 qui connecte en mode de fonctionnement externe la sortie du séparateur 46 à l'entrée du comparateur 53 et en mode de fonctionnement interne la sortie du soustracteur 50 à l'entrée du comparateur 53. Le commutateur 52 transmet également le signal INT/EXT à destination de l'interface 6 pour commander les sélecteurs 27 à 30.

Le générateur 12 comprend également un compteur d'adresse 54 dont les sorties sont directement reliées au bus d'adresse BUSA, pour réaliser l'adressage de la mémoire à lecture-écriture 4 et de la mémoire morte 8. Un aiguilleur 55 commandé par le calculateur 5 connecte l'entrée d'horloge du compteur 55 soit à la sortie de l'oscillateur 51, soit à la sortie de l'interface d'entrée-sortie 6 qui transmet le signal READY provenant du calculateur. L'entrée d'un générateur de synchronisation de ligne 56 est reliée à la sortie du séparateur 46. De cette façon les échantillons mémorisés dans la mémoire 15 du calculateur 5 peuvent être transférés dans la mémoire à lecture-écriture 4 au rythme du signal READY transmis par le calculateur et peuvent être lus dans la mémoire à lecture-écriture au rythme du signal à 32 MHz délivré par l'oscillateur 51. Un commutateur 57 transmet le signal Y/CHR de sélection des échantillons de luminance et de chrominance à destination de l'interface 6.

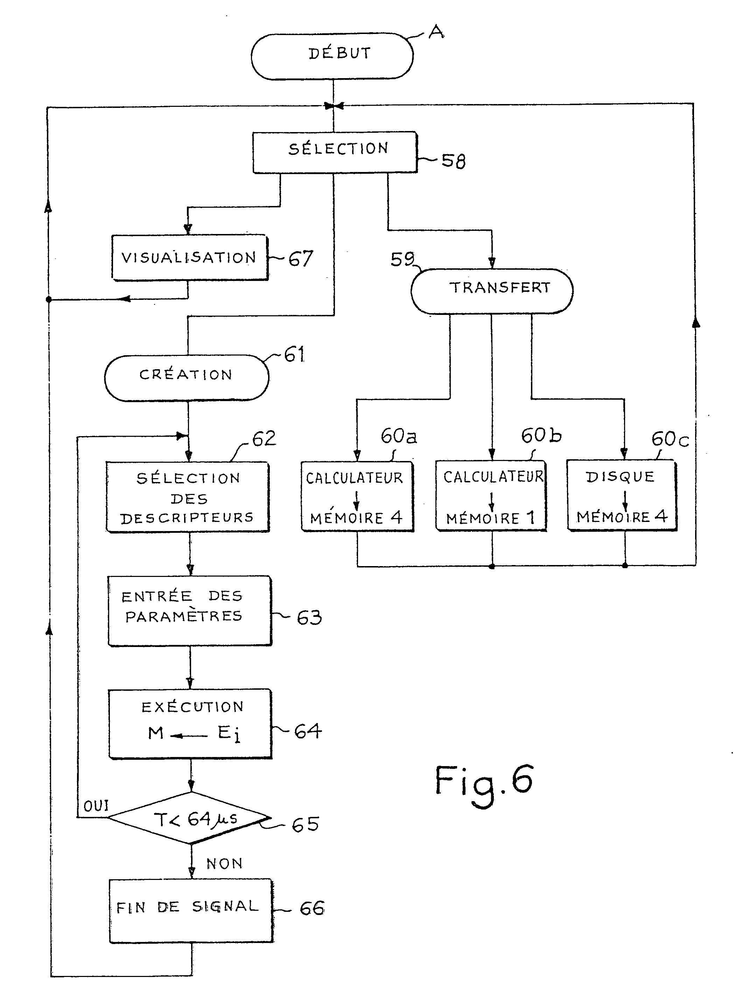

Le fonctionnement du dispositif qui vient d'être décrit est maintenant expliqué à l'aide de l'organigramme de la fig. 6 qui représente les différentes procédures que le calculateur 5 peut exécuter.

L'exécution de ces procédures a lieu de façon interactive par un dialogue qui s'établit entre le calculateur 5 et un opérateur placé devant le clavier 17 à l'écran 18.

A l'étape 58, le calculateur 5 offre à l'opérateur le choix entre trois types de procédure. Un premier type de procédure, dit de transfert 59, exécutable aux étapes 60a à 60c, permet d'exécuter, soit des transferts d'informations (étape 60a) entre la mémoire centrale 15 du calculateur 5 et la mémoire à lecture-écriture 4, soit des transferts d'informations entre la mémoire centrale 15 du calculateur 5 et la mémoire du dispositif de mémorisation 1 (étape 60b), soit des transferts d'informations en direct entre la mémoire à lecture-écriture 4 et le dispositif de mémorisation 1 (étape 60c).

Chacune des procédures représentées aux étapes 59 à 60c fait appel pour son déroulement à l'exécution d'instructions d'entrée-sortie bien connues dans l'état de la technique et qui par conséquent n'ont pas besoin d'être décrites pour la mise en œuvre de l'invention.

Un deuxième type de procédure dit création de signal 61 est figuré par les étapes 62 à 66 de la fig. 6. Elle permet à l'opérateur de créer à volonté une grande variété de signaux en associant de toutes les façons possibles plusieurs signaux élémentaires de configuration prédéterminée. La configuration d'un signal élémentaire peut être représentée à l'aide d'une fonction mathématique $y = f(t)$

quelconque dans laquelle y représente l'amplitude du signal et f(t) une fonction mathématique du temps. A titre d'exemple f(t) pourra être une constante, une fonction linéaire du temps, une fonction trigonométrique, etc. L'obtention de la fonction représentative d'un signal élémentaire est réalisée à l'aide d'un sous-programme qui peut être mémorisé à l'intérieur de la mémoire morte 16 du calculateur 5, ou qui pourra être chargé à partir de la mémoire à disque 7 dans la mémoire principale 15 au moment de son exécution.

L'exécution successive de plusieurs sous-programmes correspondant chacun à une fonction $y = f(t)$ permet de cette façon d'obtenir une suite de signaux élémentaires se succédant dans le temps.

Le sous-programme associé à chaque signal élémentaire est adressé à partir d'un descripteur de signal qui fournit l'adresse de début de sous-programme dans la mémoire morte 16 du calculateur ainsi que l'adresse $AZ_1$ de la zone de donnée située dans la mémoire centrale 15 où sont rangés les échantillons numériques du signal lors de l'exécution du sous-programme.

Chaque descripteur est sélectionné à l'étape 62 par l'opérateur qui frappe sur le clavier le type du descripteur désiré. A l'étape 63 les paramètres du signal sont introduits dans la mémoire centrale 15 aux adresses spécifiées par les zones 22 à 24 du descripteur.

A l'étape 64 le sous-programme adressé par le descripteur sélectionné est lancé.

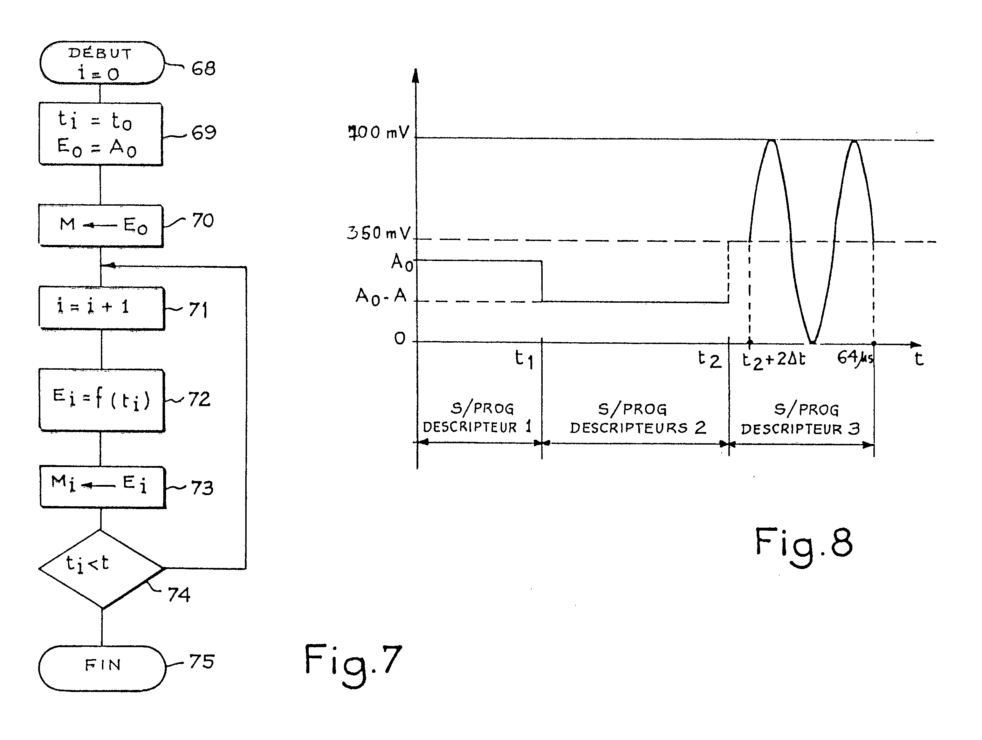

Un organigramme type d'exécution d'un sous-programme est montré à la fig. 7. Au début, à l'instant $t = t_0$, au cours des étapes 68 à 70, l'amplitude du premier échantillon $E_0$ est rendue égale à $A_0$ et l'échantillon $E_0$ est rangé à la première adresse de la zone de donnée en mémoire centrale pointée par le descripteur correspondant. Puis aux instants $t_i$ successifs, définis par la période d'échantillonnage, le sous-programme calcule, aux étapes 71 et 72, l'amplitude des échantillons $E_i$ selon l'équation $E_i = f(t_i)$ où f est la fonction mathématique permettant d'obtenir l'amplitude du signal en fonction du temps. A l'étape 73 les échantillons $E_i$ calculés sont rangés aux adresses successives de la zone de donnée réservée au descripteur. Le calcul s'arrête à l'étape 75 lorsque l'instant $t_i$ de calcul atteint l'instant final indiqué par la zone d'adresse $AZ_4$ du descripteur.

Des exemples types de lancement de sous-programmes sont donnés ci-après pour des descripteurs de signaux respectivement sans changement, avec transition ou représentant des fréquences.

| Types | Commentaires |
|---|---|
| Descripteur 1 : Sans changement<br>Anciens paramètres:<br>    Amplitude $A_0$<br>    Temps $t_0$<br>Nouveaux paramètres:<br>    Temps $t=t_1$<br>    Test FIN 64μs | Entrée des paramètres |
| S/PROG. Pour $t_i$ tel que $t_0 < t_i < t_1$<br>    Faire $M(i) \leftarrow A_0 = E_i$ | Exécution du sous-programme $y = f(t) = A_0$ |
| Descripteur 2: Transition<br>Anciens paramètres:<br>    Amplitude $A_0$<br>    Temps $t_i = t_1$<br>Nouveaux paramètres:<br>    Amplitude $A$<br>    Temps $t_i = t_2$ | Entrée des paramètres |
| Test 0   $A_0 + A \leq 700_{mV}$<br>Test     $t_2 \leq 64$ μs<br>S/PROG. Pour $t_i$ tel que $t_1 < t_i < t_2$<br>    Faire $M(i) \leftarrow A_0 - A = E_i$ | Exécution du sous-programme $y = f(t) = A_0 - A$ |
| Descripteur 3: Fréquence<br>Anciens paramètres:<br>    Amplitude $A_0 - A$<br>    Temps $t = t_2$ | Entrée des paramètres |
| Nouveaux paramètres: Fréquence F<br>    Valeur moyenne $B = 350_{mV}$<br>    Amplitude $C = 350_{mV}$<br>    Temps $t = 64$ μs | Valeur moyenne |

| Types | Commentaires |
|---|---|
| Test    si $A_o - A \neq B$ faire transition $2\Delta T \; B \rightarrow 350_{mV}$ <br> Test    Temps $\leqslant 64\ \mu s$ <br> Test    Valeur crête $B + C < 700_{mV}$ <br> Test    $0,5 \leqslant F \leqslant 12\ MHz$ <br> S/PROG. $M_i \leftarrow E_i = C \sin 2\ \pi F \cdot t_i$ | Exécution du sous-programme <br><br><br> $y = B + C \sin 2\ \pi F \cdot t$ |

A la fin d'exécution d'un sous-programme la procédure renvoie l'opérateur à l'étape 62 pour lui demander de sélectionner un autre descripteur de signal.

Plusieurs descripteurs peuvent être ainsi sélectionnés tant que la somme des temps représentant la durée de chaque signal élémentaire ne dépasse pas la durée de 64 μs d'une ligne de balayage d'une image de télévision.

Un test est effectué par la procédure à l'étape 65 qui renvoie l'opérateur à l'étape 66 lorsque la somme des signaux élémentaires dépasse le temps de 64 μs.

Le signal, obtenu après sélection dans l'ordre des descripteurs 1, 2 et 3 précités et exécution des sous-programmes correspondants, peut être alors visualisé par l'écran 18 du calculateur (étape 67) de la façon représentée à la fig. 8. Sur cette figure l'amplitude du premier signal élémentaire correspondant au descripteur N° 1 est constante et égale à $A_o$, de l'intant $t = 0$ à l'instant $t = t_1$. L'amplitude du deuxième signal élémentaire correspondant au description N° 2 est également constante mais égale cette fois-ci à $A_0 - A$ de l'instant $t_1$ à l'instant $t_2$. Le signal obtenu par l'exécution du sous-programme correspondant du descripteur 3 est sinusoïdale, sa valeur B moyenne est à l'amplitude $350_{mV}$ et sa valeur crête à crête est de $700_{mV}$.

Il va de soi que le principe de réalisation de l'invention permet d'obtenir de très nombreuses variétés de signaux en agissant, soit sur l'ordre de sélection des descripteurs, car à n descripteurs on peut faire correspondre $n! = 1 \times 2, ..., x n$ signaux possibles, soit en agissant sur la valeur des paramètres introduits dans chaque descripteur ou en agissant encore au niveau du choix des fonctions mathématiques représentant les différents signaux élémentaires. Dans tous les cas on notera que la création d'un nouveau signal n'entraîne aucune modification au niveau des dispositifs matériels, et qu'elle entraîne tout au plus l'écriture d'un nouveau sous-programme de calcul d'échantillonnage correspondant à la nouvelle fonction mathématique introduite qui ne doit pas faire de difficulté pour les programmeurs bien avertis des techniques de programmation.

Bien que les principes de la présente invention aient été décrits ci-dessus en relation avec un exemple particulier de réalisation il faut comprendre que la description n'a été fait qu'à titre d'exemple et ne limite pas la portée de l'invention.

**Revendications**

1. Dispositif de génération de signaux de test d'équipements électroniques comportant des moyens (1) de mémorisation des signaux de test sous forme d'échantillons numériques couplés à un convertisseur (2) numérique-analogique pour transformer les échantillons mis sous forme numérique en signaux analogiques à la sortie du dispositif, caractérisé en ce qu'il comprend:
— une mémoire (4) à lecture-écriture interposée entre le convertisseur numérique-analogique et les moyens de mémorisation,
— un calculateur (5) couplé aux moyens de mémorisation et à la mémoire (4) à lecture-écriture comprenant:
— des moyens (14, 15, 16, 19) de création de signaux de test sous la forme d'échantillons numériques,
— des moyens (6, 42, 43) pour transférer, à l'intérieur de la mémoire à lecture-écriture, les échantillons mémorisés à l'intérieur des moyens de mémorisation et les signaux de test créés par les moyens de création,
— ainsi que des moyens (3) pour synchroniser le transfert des échantillons mémorisés à l'intérieur de la mémoire à lecture-écriture à destination du convertisseur numérique-analogique.

2. Dispositif selon la revendication 1, caractérisé en ce que les moyens de création des signaux de test sous la forme d'échantillons sont constitués par une unité de traitement microprogrammée (14).

3. Dispositif selon la revendication 2, caractérisé en ce que l'unité de traitement microprogrammée est constituée par des moyens de calcul couplés à des moyens de mémorisation (16) de descripteurs de signaux ainsi qu'à des moyens (15, 16) de mémorisation de séquences d'instructions de programme et à des moyens de mémorisation de données pour l'obtention des échantillons.

4. Dispositif selon la revendication 3, caractérisé en ce que les moyens de mémorisation des descripteurs de signaux sont adressés par un clavier (17) extérieur au calculateur.

5. Dispositif selon l'une des revendications 2 à 4, caractérisé en ce que les moyens de mémorisation des descripteurs de signaux comprennent pour chaque descripteur une zone (20) indiquant le type du descripteur, une zone (21) de mémorisation de l'adresse de début de la séquence d'instruction pour l'obtention des échantillons correspondant à ce descripteur, des zones d'adresses (23, 24, 24bis) de zones de travail pour le rangement des paramètres relatifs au signal dans les moyens de mémorisation de données et une zone d'adresse (22) de début d'une zone de rangement des échantillons dans les moyens de mémorisation.

6. Dispositif selon l'une des revendications 1 à 5, caractérisé en ce que la zone de travail pour ranger les paramètres comprend:
— une zone (23) pour ranger un paramètre donnant l'instant de début du premier échantillon du signal,
— une zone (24) pour ranger un paramètre donnant l'amplitude du dernier échantillon, et
— une zone (24bis) pour ranger l'instant de génération du dernier échantillon.

7. Dispositif selon l'une des revendications 1 à 6, caractérisé en ce que la mémoire à lecture-écriture (4) est adressée par un compteur d'adresse (54) commandé par le calculateur pour l'écriture des échantillons dans la mémoire à lecture-écriture et commandé par les moyens de synchronisation (3) pour la lecture des échantillons dans la mémoire à lecture-écriture (4).

8. Dispositif selon l'une des revendications 1 à 7, caractérisé en ce qu'il comprend en outre des circuits de démultiplexage (42, 43) pour l'écriture des échantillons dans la mémoire à lecture-écriture et des circuits de multiplexage (44) pour le transfert des échantillons de la mémoire à lecture-écriture à destination du convertisseur numérique-analogique (2).

9. Dispositif selon l'une des revendications 1 à 8, caractérisé en ce que les circuits de démultiplexage (42, 43) sont commandés par le calculateur (5).

10. Dispositif selon l'une des revendications 1 à 9, caractérisé en ce que les circuits de multiplexage (44) sont commandés par les moyens de synchronisation (3).

## Patentansprüche

1. Vorrichtung zur Erzeugung von Testsignalen für elektronische Geräte, mit Speichermitteln (1) zum Speichern der Testsignale in Form von digitalen Abtastproben, welche an einen Digital/Analog-Umsetzer (2) angekoppelt werden, um die in digitale Form gebrachten Abtastproben in Analogsignale am Ausgang der Vorrichtung umzusetzen, dadurch gekennzeichnet, dass sie umfasst:
— einen Lese/Schreib-Speicher (4), der zwischen den Digital/Analog-Umsetzer und die Speichermittel eingefügt ist,
— einen Rechner (5), der an die Speichermittel und an den Lese/Schreib-Speicher (4) angekoppelt ist und enthält:
— Mittel (14, 15, 16, 19) zur Erzeugung von Testsignalen in Form von digitalen Abtastproben,
— Mittel (6, 42, 43) zur Überführung der in den Speichermitteln gespeicherten Abtastproben und der durch die Erzeugungsmittel erzeugten Testsi

gnale innerhalb des Lese/Schreib-Speichers,
— sowie Mittel (3) zum Synchronisieren der Überführung der in dem Lese/Schreib-Speicher gespeicherten Abtastproben zu dem Digital/Analog-Umsetzer.

2. Vorrichtung nach Anspruch 1, dadurch gekennzeichnet, dass die Mittel zur Erzeugung der Testsignale in Form von Abtastproben durch eine mikroprogrammierte Verarbeitungseinheit (14) gebildet sind.

3. Vorrichtung nach Anspruch 2, dadurch gekennzeichnet, dass die mikroprogrammierte Verarbeitungseinheit durch Rechenmittel gebildet ist, welche an Speichermittel (16) zum Speichern von Signalbeschreibungen sowie an Speichermittel (15, 16) zum Speichern von Programmbefehlsfolgen und an Speichermittel zum Speichern von Daten füt die Erhaltung der Abtastproben angekoppelt sind.

4. Vorrichtung nach Anspruch 3, dadurch gekennzeichnet, dass die Speichermittel zum Speichern der Signalbeschreibungen durch eine Tastatur (17) ausserhalb des Rechners adressiert werden.

5. Vorrichtung nach einem der Ansprüche 2 bis 4, dadurch gekennzeichnet, dass die Speichermittel zum Speichern der Signalbeschreibungen für jede Beschreibung eine Zone (20) enthalten, welche die Art der Beschreibung angibt, eine Speicherzone (21) für die Anfangsadresse der Befehlsfolge zum Erhalten der dieser Beschreibung entsprechenden Abtastproben, Adresszonen (23, 24, 24bis) für Arbeitszonen zum Einordnen der zu dem Signal gehörenden Parameter in den Daten-Speichermitteln und eine Adresszone (22) für den Anfang einer Einordnungszone für die Abtastproben in den Speichermitteln enthalten.

6. Vorrichtung nach einem der Ansprüche 1 bis 5, dadurch gekennzeichnet, dass die Arbeitszone zum Einordnen der Parameter enthält:
— eine Zone (23) zum Einordnen eines Parameters, welcher den Anfangszeitpunkt der ersten Signalabtastprobe angibt,
— eine Zone (24) zum Einordnen eines Parameters, welcher die Amplitude der letzten Abtastprobe angibt,
— und eine Zone (24bis) zum Einordnen des Erzeugungszeitpunktes der letzten Abtastprobe.

7. Vorrichtung nach einem der Ansprüche 1 bis 6, dadurch gekennzeichnet, dass der Lese/Schreib-Speicher (4) durch einen Adresszähler (54) adressiert wird, welcher durch den Rechner gesteuert wird, um die Abtastproben in den Lese/Schreib-Speicher einzuschreiben, und durch die Synchronisationsmittel (3) gesteuert wird, um die Abtastproben aus dem Lese/Schreib-Speicher (4) auszulesen.

8. Vorrichtung nach einem der Ansprüche 1 bis 7, dadurch gekennzeichnet, dass sie ferner Demultiplexierschaltungen (42, 43) zum Einschreiben der Abtastproben in den Lese/Schreib-Speichern und Multiplexierschaltungen (44) für die Überführung der Abtastproben von dem Lese/Schreib-Speicher zu dem Digital/Analog-Umsetzer (2) umfasst.

9. Vorrichtung nach einem der Ansprüche 1 bis 8, dadurch gekennzeichnet, dass die Demultiplexierschaltungen (42, 43) durch den Rechner (5) gesteuert werden.

10. Vorrichtung nach einem der Ansprüche 1 bis 9, dadurch gekennzeichnet, dass die Multiplexierschaltungen (44) durch die Synchronisationsmittel (3) gesteuert werden.

## Claims

1. Device for the generation of test signals for electronic equipments, comprising means (1) for storing test signals in the form of digital samples coupled to a digital-analog converter (2) for transforming the digitalized samples into analog signals at the output of the device, characterized in that it comprises:
— a read-write memory (4) interposed between the digital-analog converter and the storing means;
— a calculator (5) coupled to the storing means and to the read-write memory comprising:
— means (14, 15, 16, 19) for the generation of test signals in the form of digital samples,
— means (6, 42, 43) for transferring the samples stored inside of the storing means and the test signals generated by the generating means within the read-write memory,
— as well as means (3) for synchronizing the transfer of the samples stored inside of the read-write memory to the digital-analog converter.

2. Device according to Claim 1, characterized in that the means for the generation of the test signals in the form of samples are formed of a microprogrammed processing unit (14).

3. Device according to Claim 2, characterized in that the microprogrammed processing unit is formed of computation means coupled to means (16) for storing signal descriptors as well as to means (15, 16) for storing sequences of program instructions and to means for storing data for obtaining samples.

4. Device according to Claim 3, characterized in that the means for storing descriptors of signals are addressed by a keyboard (17) which is exterior to the calculator.

5. Device according to any of Claims 2 to 4, characterized in that the means for storing descriptors of signals comprise, for each descriptor, a zone (20) indicating the type of descriptor, a zone (21) for storing the address of the beginning of the instruction sequence for obtaining samples corresponding to this descriptor, address zones (23, 24, 24bis) of operating zones for the arrangement of parameters relating to the signal inside of the data storing means and an address zone (20) for the beginning of a sample arrangement zone in the storing means.

6. Device according to any of Claims 1 to 5, characterized in that the operating zone for arranging the parameters comprises:
— a zone (23) for arranging a parameter indicating the moment of the beginning of the first signal sample,
— a zone (24) for the arrangement of a parameter indicating the amplitude of the last sample,
— and a zone (24bis) for the arrangement of the moment of generation of the last sample.

7. Device according to any of Claims 1 to 6, characterized in that the read-write memory (4) is addressed by an address counter (54) controlled by the calculator for writing the samples into the read-write memory and controlled by the synchronization means (3) for the reading of the samples from the read-write memory (4).

8. Device according to any of Claims 1 to 7, characterized in that it further comprises demultiplexing circuits (42, 43) for writing the samples into the read-write memory and multiplexing circuits (44) for the transfer of samples from the read-write memory to the digital-analog converter (2).

9. Device according to any of Claims 1 to 8, characterized in that the demultiplexing circuits (42, 43) are controlled by the calculator (5).

10. Device according to any of Claims 1 to 9, characterized in that the multiplexing circuits (44) are controelled by the synchronization means (3).

Fig.1

Fig.2

Fig.3

13

Fig.4

Fig.5

0 089 871

Fig.6

Fig.7

Fig.8